# EUROPEAN PATENT APPLICATION

(11) **EP 4 549 880 A1**
(43) Date of publication of application: **07.05.2025**
(21) Application number: 24195960.0
(22) Date of filing: 22.08.2024
(51) Int. Cl.: G01C 21/16, G01C 23/00

(54) **NAVIGATION ASSURANCE IN GPS DENIED ENVIRONMENTS**

(30) Priority: 31.08.2023 US 202363535985 P; 02.08.2024 US 202418793565
(71) Applicant: Rockwell Collins, Inc., Cedar Rapids, IA 52498 (US)
(72) Inventor: SCHLICHTEMEIER, Isaac D., Cedar Rapids, IA, 52403-3128 (US); MARTINEZ, Christina M., Abilene, TX, 79602 (US)
(74) Representative: Dehns

(57) **Abstract**

A system and method for validating navigational aids includes a navigation solution monitor that receives sensor inputs from a plurality of onboard sensors and produces a trustworthiness metric. The navigation solution monitor updates inertial navigation units (INU) based on the sensor with the highest trustworthiness metric. The navigation solution monitor may measure the trustworthiness of each sensor against every other sensor such that the trustworthiness metric represents a deviation from other sensors.

## Description

### PRIORITY

The present application claims the benefit under 35 U.S.C. § 119(e) of U.S. Provisional App. No. 63/535,985 (filed August 31, 2023).

### GOVERNMENT LICENSE RIGHTS

The U.S. Government has a paid-up license in this invention and the right in limited circumstances to require the patent owner to license others on reasonable terms as provided by the terms of H92241-20-D-0002-H9224120F0106 awarded by the United States Army

### BACKGROUND

In flight, GPS is used to refine positional information. These solutions are very good when GPS is available and trustworthy. However, during many missions, GPS-denied environments and spoofed areas cause a degradation in navigation solutions. It would be advantageous to have a system and method for verifying positional information.

### SUMMARY

In one aspect, embodiments of the inventive concepts disclosed herein are directed to a system and method for validating navigational aids. A navigation solution monitor receives sensor inputs from a plurality of onboard sensors and produces a trustworthiness metric. The navigation solution monitor updates inertial navigation units (INU) based on the sensor with the highest trustworthiness metric.

In a further aspect, the navigation solution monitor may measure the trustworthiness of each sensor against every other sensor such that the trustworthiness metric represents a deviation from other sensors.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:

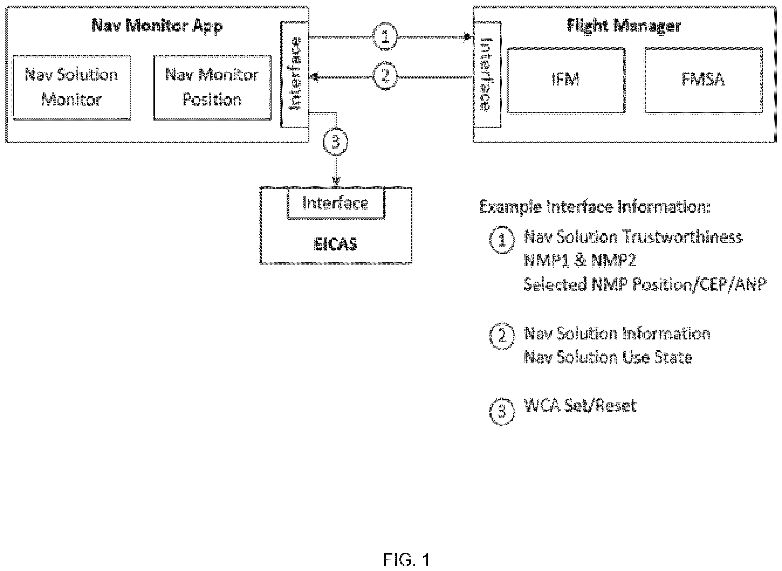

FIG. 1 shows a block diagram of a system according to an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed a system and method for validating navigational aids. A navigation solution monitor receives sensor inputs from a plurality of onboard sensors and produces a trustworthiness metric. The navigation solution monitor updates inertial navigation units (INU) based on the sensor with the highest trustworthiness metric. The navigation solution monitor may measure the trustworthiness of each sensor against every other sensor such that the trustworthiness metric represents a deviation from other sensors.

Referring to FIG. 1, a block diagram of a system according to an exemplary embodiment is shown. In at least one embodiment, an on-board application 100 instantiates a navigation solution monitor 104 process that receives inputs from other on-board navigational aids such as EGI, GPS, INU, DVE, VOR/TACAN, or the like. The navigation solution monitor 104 determines a trustworthiness value for each of the available on-board navigational aids.

In at least one embodiment, the navigation solution monitor 104 compares a navigation solution derived from each of the on-board navigational aids. The solutions are compared to each other and any deviations are recorded. It may be appreciated that errors, spoofing, and deliberate interference are specific to each navigational aid, and attacks are unlikely to cause the same deviation in separate navigational aids, so it is unlikely that separate navigational aids will resolve to the same erroneous value.

In at least one embodiment, the navigation solution monitor 104 determines a trustworthiness based on deviations from some average solution. Furthermore, each navigational aid may be associated with certain metrics that may be define the accuracy of the specific navigational aid. The trustworthiness value may be further weighted according to these metrics.

Trustworthiness values may be determined for all sources based on comparison to Doppler for velocity validation, comparison to radio, bearing from VOR and TACAN to ground station, distance from TACAN to ground station, comparison to DVE position when in LiDAR mode, comparison to INU historical drift data for position, and comparison to both INUs for velocity. Specifically for EGI, trustworthiness values may be based on CEP of EGI, comparison to offside EGI for position and / or velocity, and comparison to offside GPS for position. Specifically for GPS, trustworthiness values may be based on CEP of GPS and comparison to offside GPS for position. Specifically for Doppler, trustworthiness values may be based on CEP of Doppler, including GPS values if in GPS aiding. Specifically for DVEPS, trustworthiness values may be based on CEP of DVEPS.

In at least one embodiment, trustworthiness values are determined for each navigation solution based on integrity values (CEP/ANP), positional, bearing, and velocity information, and offsets between the various solutions. For example, when evaluating navigation solutions, a bearing could be determined from VOR, tuned via an identifier. Since the VOR position would be known from a database, a bearing from the navigation solution's position to the VOR would be determined. The VOR bearing from the LRU would then be compared to the computed VOR. If there is a significant difference between the bearings, the solution's trustworthiness score would be lowered. The threshold for a "significant difference" may be defined by the system; for example, an 8-degree deviation for VOR, but greater or lesser deviations for other comparisons systems.

In at least one embodiment, a navigation monitor position 106 process receives an INU position solution and updates the INU position solution with the highest trustworthiness navigational aid. It may be appreciated that INUs are highly accurate over short durations but tend to drift over time. INUs must be periodically calibrated against some navigational aid to compensate for such drift. The navigation monitor position 106 process determines a new position solution based on the INU and an offset from the most trustworthy navigational aid.

The trustworthiness value assigned to each navigational aid may be used to determine the most trusted navigator. The most trusted navigator is then used within navigation monitor position 106 computations.

In at least one embodiment, the functionality described herein may be embodied in a separate software application, integrated with a flight manager 102. One specific embodiment may include two EGI solutions, two GPS solutions, two pure INU solutions, one DVE solution, one Doppler solution, and one radio (VOR/TACAN) solution. The navigation solution monitor 104 evaluates all solutions for possible position and / or velocity errors. Such evaluation is performed by determining the position and velocity deltas for each navigational aid, then comparing them amongst each other. Additionally, the application may use the VOR and TACAN LRUs onboard the aircraft to provide a radio navigation solution, which may also be used for comparisons.

By monitoring both the position and velocities, the navigation solution monitor 104 process can determine a nominal drift rate for each INU solution. The process may then use the INU data to monitor for positional jumps on the other navigation solutions to help detect jamming or spoofing that may go unreported by the sensor directly. Also, velocity differences between the EGI and INU, Doppler and INU, and DVEPS and INU can help the process detect a solution difference prior to a position bias accumulating.

In at least one embodiment, the navigation solution monitor 104 process may issue various levels of alerts. For example, the navigation solution monitor 104 process may issue an error advisory when any navigation solution, other than the primary navigator, is no longer considered trustworthy. Such alert may be based on the trustworthiness value determined for inactive navigation solutions. There may be a minimum threshold and possible hysteresis to raise or lower the associated alert. Furthermore, the navigation solution monitor 104 process may issue an error caution when the primary navigator is no longer considered trustworthy. Such alert may be based on the trustworthiness value determined for the active navigation solution. There may be a minimum threshold and possible hysteresis to raise or lower the associated alert. In at least one embodiment, alerts may be produced via a crew alerting system 116 connected to the on-board application 100 vie corresponding interfaces 108, 118.

It may be appreciated that the navigation solution monitor 104 process may not automatically change the primary navigator or effect the CEP / ANP values. This is only an indication that there are positional and / or velocity issues between the sensors onboard. Pilots can still choose what navigator to use.

In at least one embodiment, the system may define civilian and military modes, wherein alerts are only issued while in a military mode to ensure there are no civil airspace impacts

This function provides the ability for the navigation sensors to be monitored internally for possible issues, alerting the crew when possible spoofing or jamming may be occurring, leaving the crew to focus on the mission.

In one exemplary embodiment, a crew may be flying with EGI1 as the selected navigator. Velocities are now monitored by INU1, INU2, Doppler, and DVEPS. Positions can be verified by using EGI2, GPS1, GPS2, DVEPS, INU1, INU2, Radio Nav via VOR / TACAN, and Doppler for velocities. Alerts are raised or lowered based on the outcome of the comparisons. Periodically, the state of each navigator will be saved to help post-flight analysis of possible jamming or spoofing locations. Information will include timestamps, state of each signal type, trustworthiness value, and position.

In at least one embodiment, the flight manager 102 comprises two FM partitions 110, 112. A radio auto-tuning functionality 112 may be integrated into the flight manager 102 suite to allow for the comparisons to the radio navigation solution. The radio auto-tuning functionality 112 may tune the VOR and / orTACAN to NDB ground stations, as required, to allow for valid radio navigation information. In at least one embodiment, the on-board application 100 may communicate with the flight manager 102 via corresponding interfaces 108, 114.

Because blended EGI solutions (EGI1 and EGI2) can be infected by bad signals to the internal Kalman filter value, it cannot be relied on solely for GPS denied operations. Therefore, in at least one embodiment, two new navigation solutions (navigation monitor positions) may be computed based on the pure INU solutions and the most trustworthy navigation solution. Of these two new solutions, one will be selected as the primary navigation monitor position.

The navigation monitor position is based on the pure INU being unaffected by jamming and spoofing. However, the pure INU solution is impacted by inertial drift, quickly making the positional data useless in a tactical environment. To counteract this issue, the new navigation solution will start with the pure INU solution, which will then be updated cyclically based on the position deltas between the INU position and the most trusted navigator. Once the most trusted navigator is determined, a position update will be performed on the navigation monitor position solutions. The offsets computed may be determined cyclically and saved for a set period of time. Should the navigation solution monitor 104 process determine that the sensor previously used for the offsets is no longer trustworthy, the process is able to look back in time until an offset based off of trustworthy data is found and can be re-applied to the navigation monitor position.

The update of the pure INU position based on the trustworthiness of other solutions allows for use of the navigation monitor position with confidence, since the position is cyclically updated. This is similar to using INU position update functionality and cyclically applying the bias from the selected solution, but only when the position is considered trustworthy. By including both GPS and DVEPS signals, there will be more instances of trustworthy positions, allowing the function to keep the INU inertial drift down.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The forms herein before described being merely explanatory embodiments thereof, it is the intention of the following claims to encompass and include such changes. Furthermore, any of the features disclosed in relation to any of the individual embodiments may be incorporated into any other embodiment.

## Claims

1. A computer apparatus comprising:
at least one processor in data communication with a memory storing processor executable code for configuring the at least one processor to:
receive inputs from a plurality of navigational aids;
determine a trustworthiness value for each of the plurality of navigational aids;
determine a most trusted navigator based on the trustworthiness values; and
perform a position correction based on the most trusted navigator.

2. The computer apparatus of Claim 1, wherein performing the position correction comprises determining an inertial navigation unit offset based on the most trusted navigator.

3. The computer apparatus of Claim 1 or 2, wherein determining the trustworthiness value for each of the plurality of navigational aids comprises comparing each navigational aid to each other navigational aid to identify deviations, and optionally wherein determining the trustworthiness value for each of the plurality of navigational aids further comprises analyzing navigational aid specific accuracy metrics.

4. The computer apparatus of any preceding Claim, wherein the at least one processor is further configured to periodically determine trustworthiness values for each of the plurality of navigational aids.

5. The computer apparatus of any preceding Claim, wherein the at least one processor is further configured to:
determine that a trustworthiness value associated with a nonprimary navigator has fallen below a threshold; and
issue an alert.

6. The computer apparatus of any preceding Claim, wherein the at least one processor is further configured to:
determine that a trustworthiness value associated with a primary navigator has fallen below a threshold; and
issue an alert.

7. A method comprising:
receiving inputs from a plurality of navigational aids;
determining a trustworthiness value for each of the plurality of navigational aids;
determining a most trusted navigator based on the trustworthiness values; and
performing a position correction based on the most trusted navigator.

8. The method of Claim 7, wherein performing the position correction comprises determining an inertial navigation unit offset based on the most trusted navigator.

9. The method of Claim 7 or 8, wherein determining the trustworthiness value for each of the plurality of navigational aids comprises comparing each navigational aid to each other navigational aid to identify deviations, and optionally wherein determining the trustworthiness value for each of the plurality of navigational aids further comprises analyzing navigational aid specific accuracy metrics.

10. The method of Claim 7, 8 or 9 further comprising periodically determining trustworthiness values for each of the plurality of navigational aids.

11. The method of Claim 7, 8, 9 or 10 further comprising:
determining that a trustworthiness value associated with a nonprimary navigator has fallen below a threshold;
determining that a trustworthiness value associated with a primary navigator has fallen below a threshold; and
issuing one or more alerts.

12. A navigation system comprising:
at least one processor in data communication with a memory storing processor executable code for configuring the at least one processor to:
receive inputs from a plurality of navigational aids;
determine a trustworthiness value for each of the plurality of navigational aids;
determine a most trusted navigator based on the trustworthiness values; and
perform a position correction based on the most trusted navigator.

13. The system of Claim 12, wherein performing the position correction comprises determining an inertial navigation unit offset based on the most trusted navigator.

14. The system of Claim 12 or 13, wherein determining the trustworthiness value
for each of the plurality of navigational aids comprises comparing each navigational aid to each other navigational aid to identify deviations, and optionally wherein determining the trustworthiness value for each of the plurality of navigational aids further comprises analyzing navigational aid specific accuracy metrics.

15. The system of Claim 12, 13 or 14, wherein the at least one processor is further
configured to periodically determine trustworthiness values for each of the plurality of navigational aids; and/or
wherein the at least one processor is further configured to:
determine that a trustworthiness value associated with a nonprimary navigator has fallen below a threshold; and
issue an alert; and/or
wherein the at least one processor is further configured to:
determine that a trustworthiness value associated with a primary navigator has fallen below a threshold; and
issue an alert.
